# EUROPÄISCHE PATENTSCHRIFT

(11) **EP 2 983 904 B1**
(45) Veröffentlichungstag und Bekanntmachung des Hinweises auf die Patenterteilung: **24.10.2018**
(21) Anmeldenummer: 14703338.5
(22) Anmeldetag: 06.02.2014
(51) Int. Cl.: B29D 30/26, B29D 30/30, B29D 30/72

(54) **VERFAHREN UND ANLAGE ZUR HERSTELLUNG EINER KARKASSE FÜR EINEN FAHRZEUGLUFTREIFEN**
PROCESS AND SYSTEM FOR PRODUCING A CARCASS FOR A PNEUMATIC VEHICLE TYRE
PROCÉDÉ ET INSTALLATION DE FABRICATION D'UNE CARCASSE DE PNEUMATIQUE DE VÉHICULE

(30) Priorität: 11.04.2013 DE 102013103633
(43) Veröffentlichungstag der Anmeldung: 17.02.2016
(73) Patentinhaber: Continental Reifen Deutschland GmbH, 30165 Hannover (DE)
(72) Erfinder: THOMFOHRDE, Claudia, 38542 Leiferde (DE); REITMANN, Sebastian, 31558 Hagenburg (DE); LINNE, Stefan, 30900 Wedemark (DE); KNEUSSEL, Ewald, 30890 Barsinghausen (DE); MÖLLER, Christian, 31552 Rodenberg (DE)
(74) Vertreter: Widjaja, Wira
(86) Internationale Anmeldenummer: PCT/EP2014/052276
(87) Internationale Veröffentlichungsnummer: WO 2014/166648

(56) Entgegenhaltungen:
- EP-A1- 0 555 813
- EP-A1- 2 191 958
- EP-A1- 2 386 406
- EP-A2- 0 873 852
- WO-A1-2005/105419
- WO-A1-2007/054984
- WO-A1-2012/156147
- JP-A- H06 270 288
- JP-A- 2000 108 222
- JP-A- 2004 122 658
- US-A1- 2002 108 716
- US-A1- 2007 187 016

## Beschreibung

Die Erfindung betrifft ein Verfahren zur Herstellung einer Karkasse für einen Fahrzeugluftreifen, welche mit einem Gürtelverband und einem Laufstreifen zum fertigen Rohreifen komplettiert wird, wobei das Verfahren folgende Schritte aufweist:
- Aufbau einer seitenwandfreien Karkasse mit einer Innenschicht, einer ein- oder mehrlagigen Karkasseinlage, Wulstkernen, insbesondere mit Kernprofilen, an einer Karkassstation auf einer Karkass-Bautrommel und unter Erstellung der Lagenumschläge,
- Aufbringen der Seitenwände auf die Karkasse,
- Überführen der mit den Seitenwänden versehenen Karkasse zu einer Bombiermaschine und Bombieren der Karkasse in eine torusförmige Gestalt.

Die Erfindung betrifft ferner eine Anlage zur Herstellung einer Karkasse für einen Fahrzeugluftreifen, welche mit einem Gürtelverband und einem Laufstreifen zum fertigen Rohreifen komplettiert wird, mit einer Karkassstation mit einer Karkassmaschine und einer Karkass-Bautrommel, einer Vorrichtung zum separaten Aufbringen der Seitenwände, einer Bombierstation und einer entlang eines insbesondere linearen Transferpfades verfahrbaren Transfereinrichtung für die Karkasse.

Es ist bekannt, auf einer zylindrischen Bautrommel eine seitenwandfreie Karkasse zu erstellen, wobei zumindest eine Karkasseinlage gewickelt und gespleißt wird, anschließend ringförmige Verstärkungsaufbauten mit Wulstkernen gesetzt und die Lagenumschläge erstellt werden. Das bekannte Verfahren erfordert zum Aufbringen der Seitenwände und zum anschließenden Transfer der Karkasse zur Bombiermaschine eine mehrmalige Übergabe der Karkasse und den Einsatz mehrerer entsprechender Transfereinrichtungen. Darunter leidet ein rationeller Ablauf des Aufbauverfahrens und der maschinelle Aufwand ist hoch.

Die EP 0 555813 A1, WO 2005/105419 A1, EP 0 873 852 A2, US 2002/108716 A1, JP 2004 122658 A und US 2007/187016A1 offenbaren herkömmliche Verfahren zur Herstellung von Fahrzeugreifen.
Der Erfindung liegt die Aufgabe zugrunde, ein Verfahren und eine Anlage der eingangs genannten Art zu Verfügung zu stellen, mit welchen der Karkassaufbau wesentlich rationeller erfolgen kann, insbesondere soll es möglich sein, Reifen unterschiedlicher Konstruktionen fertigen zu können, beispielsweise Reifen mit unterschiedlichen Karkasslagenumschlaglängen und Karkasslagenausführungen- bzw. kombinationen.
Was das Verfahren betrifft wird die gestellte Aufgabe erfindungsgemäß dadurch gelöst, dass die seitenwandfrei erstellte Karkasse auf eine Transfereinrichtung übergeben wird, auf welcher sie sowohl während des Anbringens der Seitenwände als auch während des nachfolgenden Transfers zur Bombiermaschine verbleibt.
Die zugehörige Anlage ist erfindungsgemäß dadurch gekennzeichnet, dass die Vorrichtung zum separaten Aufbringen der Seitenwände eine zwischen der Karkassstation und der Bombierstation positionierte Seitenwandstation mit zwei Seitenwandtrommeln ist, welche an einer Halterung parallel zum Transferpfad verfahrbar sind, wobei die Seitenwandtrommeln mitsamt der Halterung entlang eines Gestells in den und aus dem Transferpfad bewegbar sind.
Gemäß der Erfindung verbleibt daher die Karkasse beginnend bei ihrem seitenwandfreien Aufbau bis zur Übergabe an die Bombiermaschine auf einer einzigen Transfereinrichtung. Damit entfallen zeitintensive und maschinell aufwändige Übergabeschritte auf andere Einrichtungen. Während die erstellte Karkasse transferiert und mit den Seitenwänden versehen wird, kann bereits die nächste Karkasse an der Karkassstation der Anlage aufgebaut werden. Es ist daher möglich, mit der Erfindung Reifenkarkassen sehr rationell sowie zeit- und kostensparend herstellen zu können.
Besonders rationell und zeitsparend gestaltet sich das Verfahren, wenn an einer separaten Seitenwandstation die Seitenwände von einem Seitenwandservicer auf Seitwandtrommeln als ringförmig umlaufende Mischungsstreifen aufgebracht werden, die Transfereinrichtung mitsamt der Karkasse vor die Seitenwandstation verfahren wird, die Seitenwandtrommeln zum Anheften der Seitenwände koaxial zur Karkasse herangefahren und nach dem Anheften der Seitenwände von der Karkasse wegbewegt werden. Die Seitenwände sind daher als ringförmig an den Seitenwandtrommeln umlaufende Bauteile bereits vorbereitet, wenn die Transfereinrichtung mitsamt der Karkasse zur Seitenwandstation verfahren wird.
Auf besonders haltbare Weise lassen sich die Seitenwände an der Karkasse im Bereich radial innerhalb der Wulstkerne an der Innenschicht anheften.
Für eine einfache bauliche Ausführung der Transportvorrichtung für die Transfereinrichtung ist es von Vorteil, wenn die Transfereinrichtung von der Karkassstation bis zur Bombiervorrichtung entlang eines linearen Transferpfades bewegt wird.
An der Bombiervorrichtung werden die Seitenwände umgeschlagen und in ihre endgültige Position gebracht. Dabei wird die Karkasse mitsamt angehefteten Seitenwänden an eine Bombiertrommel übergeben, sodass während des Bombiervorganges die Transfereinrichtung bzw. der Karkasstragering bereits wieder zur Karkassstation zurückgefahren werden kann.

Ein alternatives Herstellungsverfahren, dass nicht Bestandteil der Erfindung ist, besteht darin, dass die seitenwandfrei erstellte Karkasse vorerst auf der Karkass-Bautrommel verbleibend in eine zweite Position verfahren wird, in welcher die Seitenwände aufgelegt und angerollt werden, wobei anschließend die Karkasse an eine Transfereinrichtung übergeben und zur Bombiermaschine verfahren wird.

Die zugehörige Anlage zeichnet sich dadurch aus, dass die Vorrichtung zum separaten Aufbringen der Seitenwände einen Seitenwandservicer aufweist, welcher neben dem Karkassservcier positioniert ist, derart, dass die Karkass-Bautrommel mit der aufgebauten seitenwandfreien Karkasse von der Karkassmaschine linear zum Seitenwandservicer verfahrbar ist.

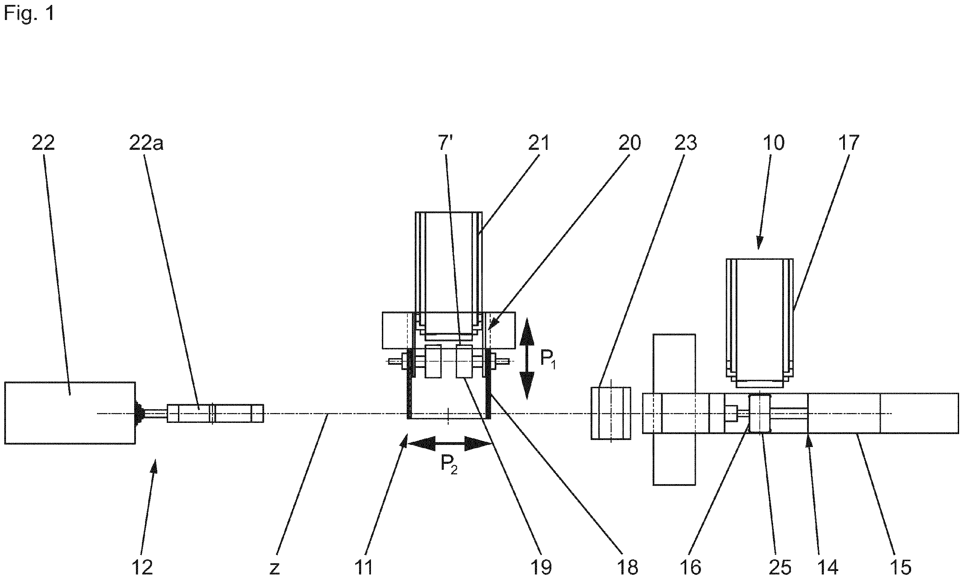

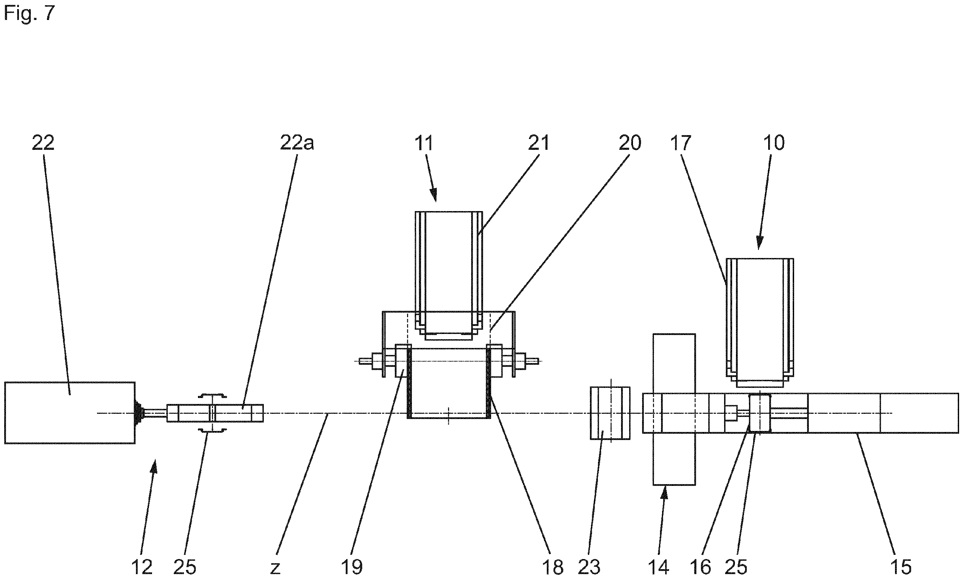

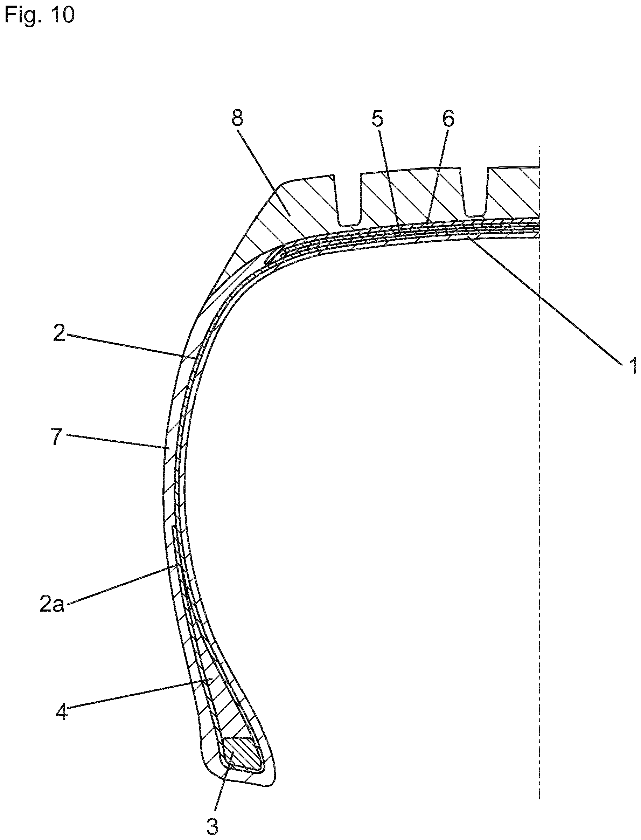

Auch bei dieser Alternative wird die Karkasse nur ein einziges Mal an eine Transfereinrichtung übergeben. Dieses Verfahren und diese Vorrichtung gestatten daher ebenfalls eine rationelle und kostensparende Fertigung von Reifenkarkassen unterschiedlicher Bauarten.
Weitere Merkmale, Vorteile und Einzelheiten der Erfindung werden nun anhand der schematischen Zeichnung, die Ausführungsbeispiele darstellt, näher beschrieben. Dabei zeigen
Fig. 1 bis Fig. 7 anhand vereinfachter und schematischer Darstellungen einzelne Schritte einer Variante des erfindungsgemäßen Verfahrens,
Fig. 8 und 9 eine andere Variante des Aufbauverfahrens und
Fig. 10 einen vereinfachten Teilquerschnitt eines PKW-Radialluftreifens.
Das erfindungsgemäße Verfahren betrifft die Herstellung eines beliebigen Fahrzeugluftreifens in Radialbauart, insbesondere für Personenkraftwagen. In der Beschreibung der Aufbauverfahren anhand der Figuren 1 bis 9 sind Reifenbauteile erwähnt, die in diesen Figuren großteils nicht dargestellt sind. Diese Bauteile und deren Positionierung im fertigen Fahrzeugluftreifen werden nun beispielhaft anhand der Fig. 10 erläutert. Der in Fig. 10 gezeigte Radialluftreifen weist eine luftdichte Innenschicht 1, eine Karkasseinlage 2, Wulstbereiche mit Wulstkernen 3 und Kernprofilen 4, einen Gürtel bestehend aus mehreren Gürtellagen 5 und einer Gürtelbandage 6, ferner Seitenwände 7 und einen Laufstreifen 8 auf. Die Karkasseinlage 2 besteht aus einer Lage oder aus mehreren Lagen von in bekannter Weise in eine Gummimischung eingebetteten, textilen oder metallischen Korden, die zumindest im Wesentlichen in radialer Richtung von Wulstbereich zu Wulstbereich verlaufen. Die Endabschnitte der Karkasseinlage 2 sind um die Wulstkerne 3 von axial innen nach axial außen geschlagen und bilden die entlang der Seitenwände 7 verlaufenden Hochschläge 2a (Lagenumschläge). Die auf den Wulstkernen 3 befindlichen Kernprofile 4 sind Gummiprofile, wobei pro Wulstkern 3 mehr als ein Kernprofil vorgesehen sein kann. Bei der Herstellung des Fahrzeugluftreifens aus den einzelnen Bestandteilen werden die Wulstkerne 3 meist gemeinsam mit den unvulkanisierten Kernprofilen 4 als Einheiten vorgefertigt. Diese Einheiten können außenseitig mit einer Lage oder mit mehreren Lagen von Wulstschutzstreifen und dergleichen versehen sein. Je nach Reifentyp können weitere, nicht gezeigte Bauteile, beispielsweise Gürtelpolster, im Reifen verbaut sein.

Die Erfindung befasst sich mit dem Aufbau der sogenannten Karkasse, diese umfasst bis auf den Laufstreifen und den Gürtelverband (inklusive Bandagen) die sonstigen Reifenbauteile, gemäß dem in Fig. 10 gezeigten Beispiel gehören zu diesen die Innenschicht 1, die Karkasseinlage 2, die Wulstkerne 3 mit Kernprofilen 4 und die Seitenwände 7. Zur Fertigstellung des Reifens wird die Reifenkarkasse mit dem Gürtelverband und dem Laufstreifen in bekannter Weise verbunden. Die damit verbundenen Verfahrensschritte sind nicht Gegenstand der Erfindung und werden daher auch nicht gesondert beschrieben.

In der nachfolgenden Beschreibung beziehen sich Angaben wie "rechts", "links", "von links nach rechts", "von rechts nach links" auf die in den Figuren dargestellten Positionen, "nach vorne" bezeichnet eine Bewegungsrichtung Richtung Blattunterkante, "nach rückwärts" eine Bewegungsrichtung Richtung Blattoberkante.

Die Figuren 1 bis 9 zeigen Draufsichten auf Arbeitsstationen einer Anlage zum Aufbau der Karkasse eines Fahrzeugluftreifens. Wie beispielsweise Fig. 1 zeigt gehören zu diesen Arbeitsstationen, von rechts nach links betrachtet, eine Karkassstation 10, eine Seitenwandstation 11 und eine Bombierstation 12. Zwischen den einzelnen Stationen ist eine Transfereinrichtung 23 entlang eines insbesondere gerade verlaufenden Transferpfades z bewegbar. Die Karkassstation 10 weist ein in Draufsicht etwa T-förmiges Grundgestell 14, eine Karkassmaschine 15 mit einer Karkass-Bautrommel 16 und einen Karkassservicer 17 auf. Die Seitenwandstation 11 weist einen Seitenwandservicer 21 und ein Grundgestell 18 auf, an welchem eine Halterung 20 nach vorne und nach rückwärts (Doppelpfeil P₁) und daher in und aus dem Transferpfad z verfahrbar ist. An der Halterung sind zwei Seitenwandtrommeln 19 derart angeordnet, dass sie aufeinander zu und voneinander weg bewegbar und somit parallel zum Transferpfad z verfahrbar sind (Doppelpfeil P₂). Die Bombierstation 12 weist eine Bombiermaschine 22 mit einer in an sich bekannter Weise ausgeführten Bombiertrommel 22a auf. Der Transferpfad z verläuft entlang der zentralen Achse der Anlage, entlang welcher die Transfereinrichtung, insbesondere ein an sich bekannter Karkasstragering 23, in unterschiedliche Positionen, wie noch beschrieben wird, verfahren wird. Das Transfersystem für den Karkasstragering 23 wird vorzugsweise oberhalb der Arbeitsstationen parallel zum Transferpfad z geführt.

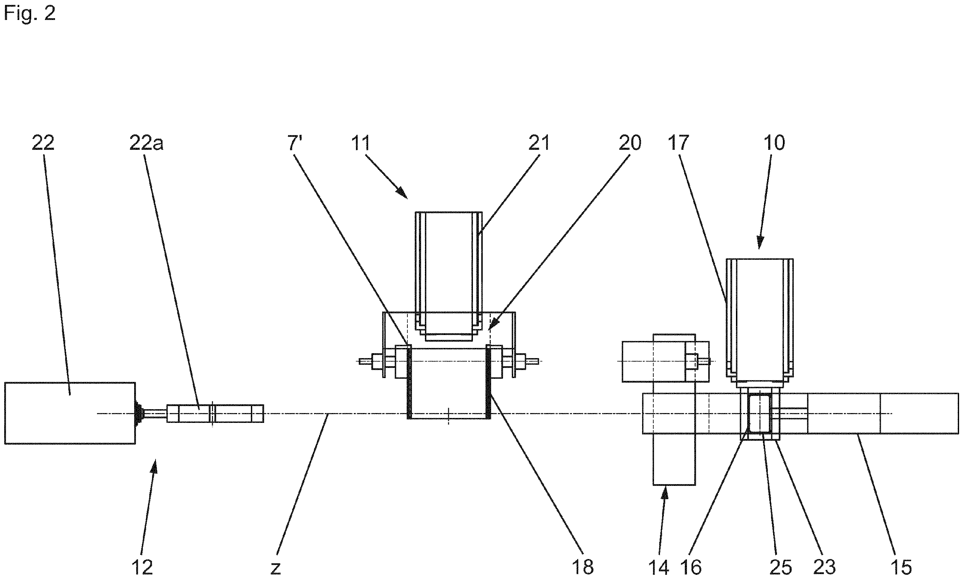

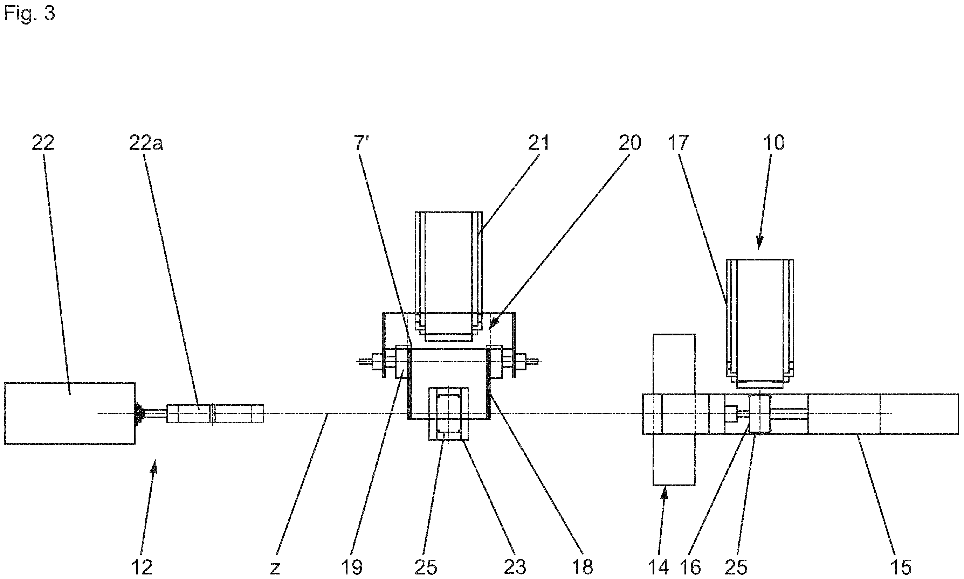

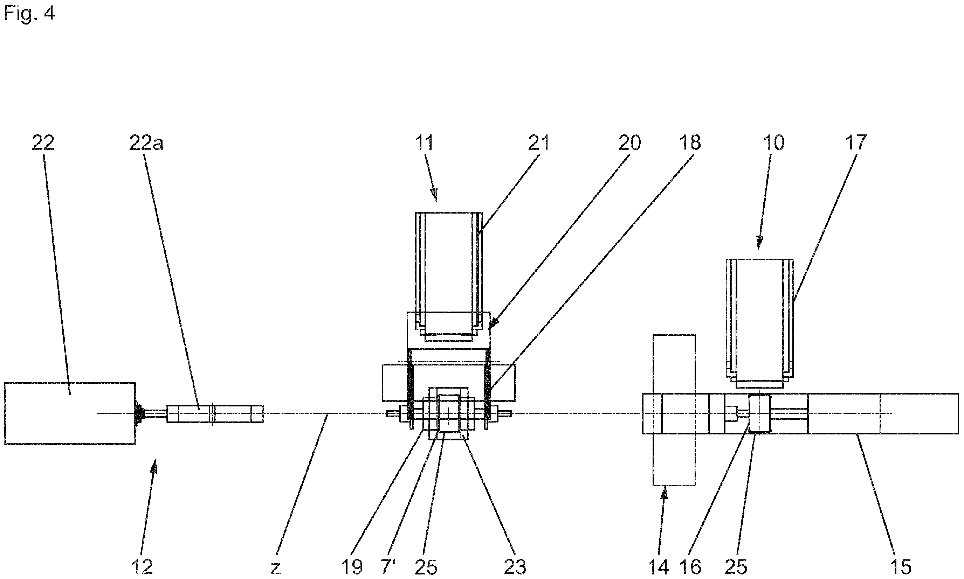

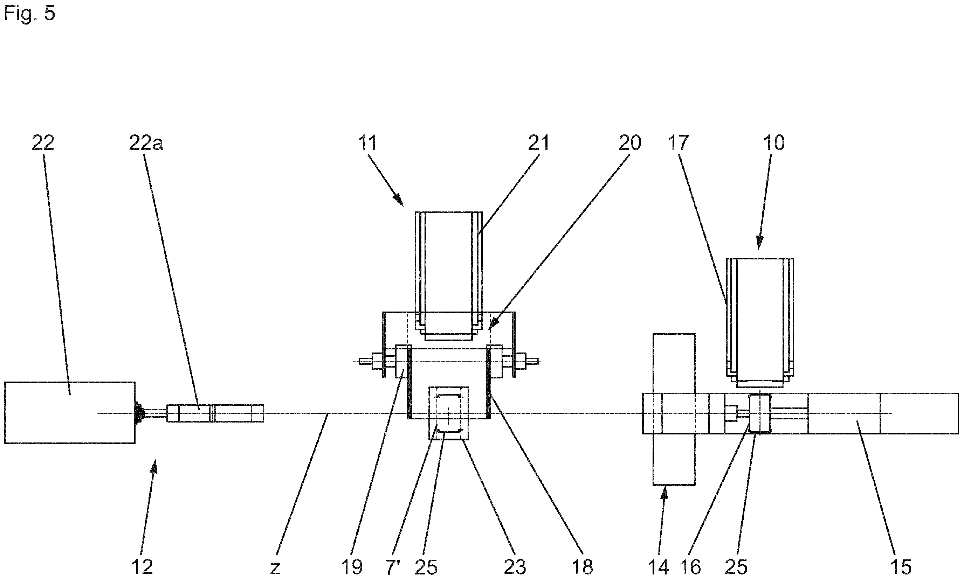

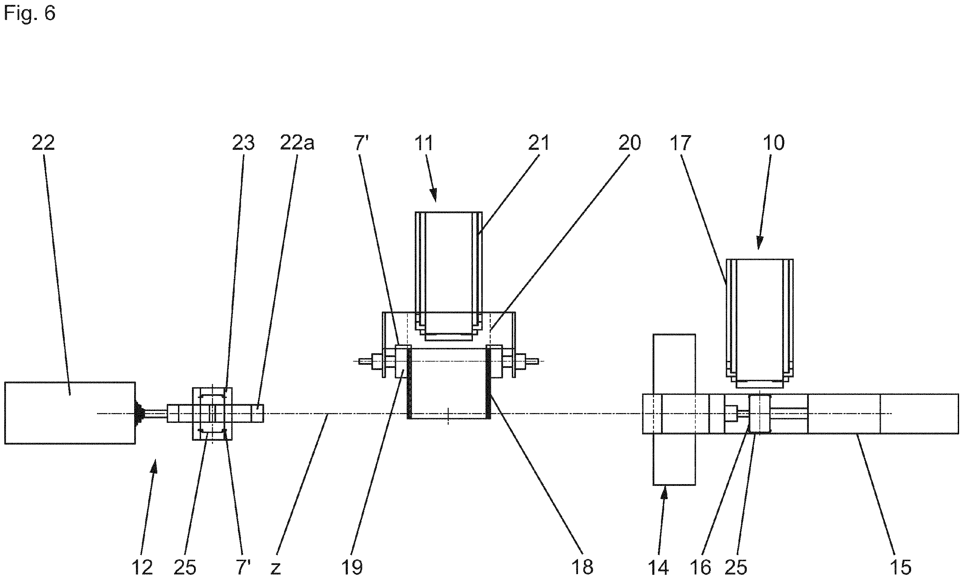

Anhand der Figuren 1 bis 7 wird nun eine Variante der Herstellung der Karkasse eines Fahrzeugluftreifens näher beschrieben. Im ersten Schritt gemäß Fig. 1 wird die Karkass-Bautrommel 16 vor dem Karkasservicer 17 positioniert. Hier werden vom Karkassservicer 17 sämtliche Komponenten der Karkasse, mit Ausnahme der beiden Seitenwände, in bekannter Weise auf die Bautrommel 16 aufgebracht bzw. gewickelt. Während die Karkasse 25, bestehend aus Wulstkernen, Innenschicht und zumindest einer Karkasslage, erstellt wird und die Lagenumschläge durchgeführt werden, wird bereits auf die beiden Seitenwandtrommeln 19, welche in ihre Arbeitsposition relativ zum Seitenwandservicer 21 verfahren worden sind, jeweils eine Seitenwand 7' gewickelt welche an der jeweiligen Seitenwandtrommel 19 einen ringförmig umlaufenden Bauteil bildet. Im nächsten, in Fig. 2 gezeigten Schritt wird der Karkasstragering 23 über die aufgebaute Karkasse 25 verfahren, der Karkasstragering 23 übernimmt die Karkasse 25 von der Karkass-Bautrommel 16 und transportiert die Karkasse 25 nach links in eine Position vor dem Seitenwandservicer 21. Hier sind mittlerweile die beiden Seitenwandtrommeln 19 an der Halterung 20 auseinander gefahren worden (Fig. 2 und Fig. 3). Nun fährt die Halterung 20 am Grundgestell 18 nach vorne, bis sich die beiden Seitenwandtrommeln 19 koaxial zum Karkasstragering 23 und damit zur Karkasse 25 befinden. Die beiden Seitenwandtrommeln 19 werden seitlich an die Karkasse 25 herangefahren und die beiden Seitenwände 7' mittels nicht gezeigter Mechanismen an die Karkasse 25, insbesondere an die Innenschicht radial innerhalb der Wulstkerne, angeheftet bzw. angeklemmt. Diese Lage ist in Fig. 4 gezeigt. Die beiden Seitenwandtrommeln 19 werden auseinander gefahren und mitsamt der Halterung 20 nach rückwärts verfahren. Fig. 5 zeigt diese Position und die vom Karkasstragering 23 gehaltene Karkasse 25 mit angehefteten Seitenwänden 7'. Sobald die Übergabe der Karkasse 25 an den Karkasstragering 23 erfolgt ist, kann auf der Karkass-Bautrommel 16 bereits die nächste Karkasse 25 aufgebaut bzw. gewickelt werden. Die mit angehefteten Seitenwänden 7' versehene Karkasse 25 wird vom Karkasstragering 23 nach links zur Bombierstation 12 gefahren und hier auf der Bombiertrommel 22a positioniert (Fig. 6). Die Bombiermaschine 22 bombiert in bekannter Weise die Karkasse 25, wobei die Seitenwände 7' umgeschlagen und in ihre endgültige Position gebracht werden. Die derart fertiggestellte Karkasse kann mittels einer nicht gezeigten Transfereinrichtung entnommen und den weiteren Schritten zur Fertigstellung des Rohreifens zugeführt werden. Während des Bombiervorganges wird der Karkasstragering 23 bereits in seine Warteposition vor die Karkassstation 10 gebracht, die Seitenwandtrommeln 19 werden mit Seitenwänden belegt, die nächste Karkasse 25 fertig aufgebaut, an die Transfereinrichtung übergeben und zur Seitenwandstation 11 zum Anheften der Seitenwände 7' gebracht.

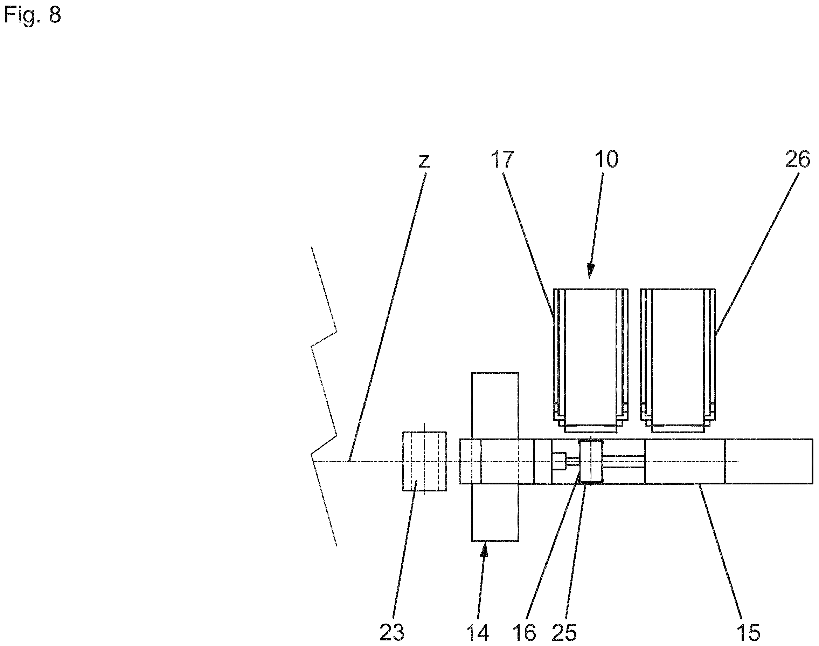

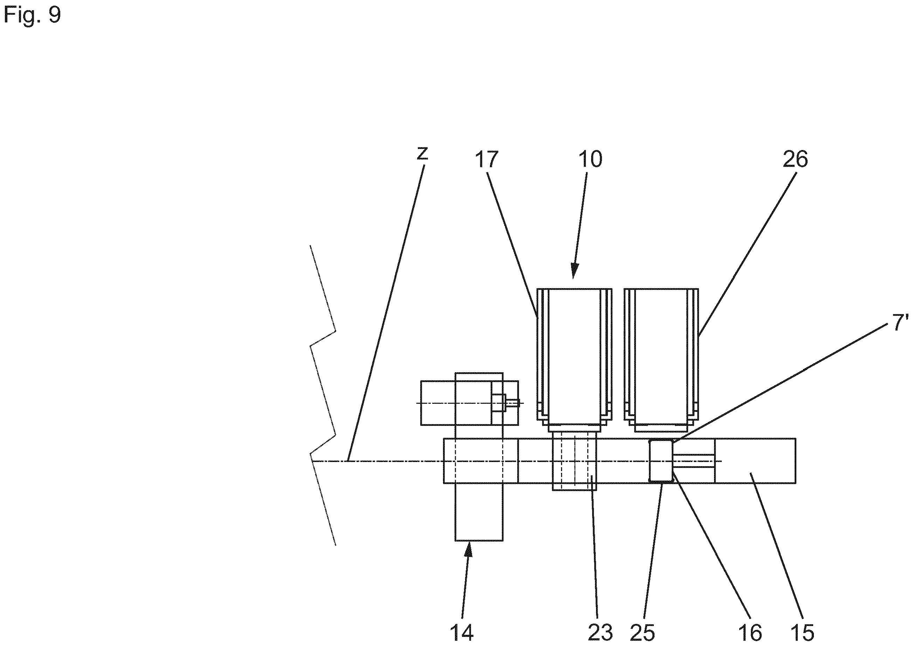

Die Figuren 8 und 9 zeigen ein alternatives Herstellungsverfahren. An der Karkassstation 10 ist ein zweiter Servicer 26 positioniert, welcher auf die Karkasse 25 die Seitenwände 7' aufbringt. Dazu wird die Karkass-Bautrommel 16 mitsamt der Karkasse 25 (Fig. 8) von der Karkassmaschine 15 linear zum Servicer 26 verfahren. Der Karkasstragering 23 kann dabei bereits in einer Warteposition vor den Karkassservicer 17 gebracht worden sein. In diesem Fall wird keine gesonderte Seitenwandstation 11 verwendet. Die Karkasse 25 wird mit den Seitenwänden komplettiert während der Karkasstragering 23 beim Servier 17 positioniert bleibt. Anschließend wird die Karkasse 25 vom Karkasstragering 23 übernommen und direkt nach links zur nicht gezeigten Bombiermaschine 22 verfahren.

### Bezugsziffernliste

- 1: Innenschicht
- 2: Karkasseinlage
- 2a: Hochschläge
- 3: Wulstkerne
- 4: Kernprofile
- 5: Gürtellagen
- 6: Gürtelbandage
- 7: Seitenwände
- 7': Seitenwände
- 8: Laufstreifen
- 10: Karkassstation
- 11: Seitenwandstation
- 12: Bombierstation
- 14: Grundgestell
- 15: Karkassmaschine
- 16: Karkass-Bautrommel
- 17: Karkassservicer
- 18: Grundgestell
- 19: Seitenwandtrommeln
- 20: Halterung
- 21: Seitenwandservicer
- 22: Bombiermaschine
- 22a: Bombiertrommel
- 23: Karkasstragering
- 25: Karkasse
- 26: Servicer
- P₁: Doppelpfeil
- P₂: Doppelpfeil
- z: Transferpfad

## Patentansprüche

1. Verfahren zur Herstellung einer Karkasse für einen Fahrzeugluftreifen, welche mit einem Gürtelverband und einem Laufstreifen (8) zum fertigen Rohreifen komplettiert wird, wobei das Verfahren folgende Schritte aufweist:
- Aufbau einer seitenwandfreien Karkasse (25) mit einer Innenschicht (1), einer ein- oder mehrlagigen Karkasseinlage (2), Wulstkernen (3), insbesondere mit Kernprofilen (4), an einer Karkassstaion (10) auf einer Karkass-Bautrommel (16) und unter Erstellung der Lagenumschläge,
- Aufbringen der Seitenwände (7') auf die Karkasse (25),
- Überführen der mit den Seitenwänden (7') versehenen Karkasse (25) zu einer Bombiermaschine (22) und Bombieren der Karkasse (25) in eine torusförmige Gestalt
**dadurch gekennzeichnet,**
**dass** die seitenwandfrei erstellte Karkasse (25) auf eine Transfereinrichtung (23) übergeben wird, auf welcher sie sowohl während des Anbringens der Seitenwände (7') als auch während des nachfolgenden Transfers zur Bombiermaschine (22) verbleibt.

2. Verfahren nach Anspruch 1, **dadurch gekennzeichnet, dass** an einer Seitenwandstation (11) die Seitenwände (7') von einem Seitenwandservicer (21) auf Seitenwandtrommeln (19) als ringförmig umlaufende Mischungsstreifen aufgebracht werden, die Transfereinrichtung (23) mitsamt der Karkasse (25) vor die Seitenwandstation (11) verfahren wird, die Seitenwandtrommeln (19) zum Anheften der Seitenwände (7') koaxial an die Karkasse (25) herangefahren und nach dem Anheften der Seitenwände von der Karkasse (25) wegbewegt werden.

3. Verfahren nach Anspruch 1 oder 2, **dadurch gekennzeichnet, dass** die Seitenwände (7') an der Karkasse (25) jeweils im Bereich radial innerhalb der Wulstkerne (3) auf die Innenschicht (1) angeheftet werden.

4. Verfahren nach einem der Ansprüche 1 bis 3, **dadurch gekennzeichnet, dass** die Transfereinrichtung von der Karkassstation (10) bis zur Bombiermaschine (22) entlang eines linearen Transferpfades (z) bewegt wird.

5. Verfahren nach einem der Ansprüche 1 bis 4, **dadurch gekennzeichnet, dass** die Seitenwände an der Bombiervorrichtung (22) umgeschlagen und in ihre endgültige Position gebracht werden.

6. Anlage zur Herstellung einer Karkasse für einen Fahrzeugluftreifen, welche mit einem Gürtelverband und einem Laufstreifen (8) zum fertigen Rohreifen komplettiert wird, mit einer Karkassstation (10) mit einer Karkassmaschine (15) und einer Karkass-Bautrommel (16), einer Vorrichtung zum separaten Aufbringen der Seitenwände (7'), einer Bombierstation (12) mit einer Bombiermaschine (22) und einer entlang eines Transferpfades (z) verfahrbaren Transfereinrichtung (23) für die Karkasse (25),
**dadurch gekennzeichnet,**
**dass** die Vorrichtung zum separaten Aufbringen der Seitenwände (7') eine zwischen der Karkassstation (10) und der Bombierstation (12) positionierte Seitenwandstation (11) mit zwei Seitenwandtrommeln (19) ist, welche an einer Halterung (20) parallel zum Transferpfad (z) verfahrbar sind, wobei die Seitenwandtrommeln (19) mitsamt der Halterung (20) entlang eines Gestells (18) in den und aus dem den Transferpfad (z) bewegbar ist.

## Claims

1. Process for producing a carcass for a pneumatic vehicle tire, which is assembled with a belt assembly and a tread rubber (8) to form the finished green tire, wherein the process comprises the following steps:
- building up a carcass (25) free from sidewalls with an inner liner (1), a single-ply or multiply carcass inlay (2), bead cores (3), in particular with bead fillers (4), at a carcass station (10) on a carcass building drum (16), while creating the ply turnups,
- applying the sidewalls (7') to the carcass (25),
- transferring the carcass (25) provided with the sidewalls (7') to a shaping machine (22), and shaping the carcass (25) into a toroidal shape,
**characterized in that** the carcass (25) produced without sidewalls is transferred to a transfer device (23), and remains thereon both as the sidewalls (7') are being fitted and also as it is being subsequently transferred to the shaping machine (22).

2. Process according to Claim 1, **characterized in that** the sidewalls (7') are applied as annularly encircling mixture strips on sidewall drums (19) by a sidewall servicer (21) at a sidewall station (11), the transfer device (23) together with the carcass (25) is moved in front of the sidewall station (11), the sidewall drums (19) are moved coaxially up to the carcass (25) for the purpose of tacking on the sidewalls (7') and, after the sidewalls have been tacked on, are moved away from the carcass (25).

3. Process according to Claim 1 or 2, **characterized in that** the sidewalls (7') are tacked to the inner liner (1) of the carcass (25), in each case in the region radially to the inside of the bead cores (3) .

4. Process according to one of Claims 1 to 3, **characterized in that** the transfer device is moved from the carcass station (10) to the shaping machine (22) along a linear transfer path (z).

5. Process according to one of Claims 1 to 4, **characterized in that** the sidewalls are folded over and moved into their final position on the shaping apparatus (22).

6. System for producing a carcass for a pneumatic vehicle tire, which is assembled with a belt assembly and a tread rubber (8) to form the finished green tire, having a carcass station (10) comprising a carcass machine (15) and a carcass building drum (16), and an apparatus for the separate application of the sidewalls (7'), a shaping station (12) comprising a shaping machine (22) and a transfer device (23) for the carcass (25), which can be moved along a transfer path (z),
**characterized**
**in that** the apparatus for the separate application of the sidewalls (7') is a sidewall station (11) positioned between the carcass station (10) and the shaping station (12) and comprising two sidewall drums (19), which drums can be moved parallel to the transfer path (z) on a mount (20), wherein the sidewall drums (19) together with the mount (20) can be moved along a frame (18) into and out of the transfer path (z).

## Revendications

1. Procédé de fabrication d'une carcasse de pneumatique de véhicule, qui est complétée avec un ensemble de ceinture et une bande de roulement (8) pour produire un pneu brut fini, le procédé présentant les étapes suivantes :
- construction d'une carcasse (25) exempte de parois latérales avec une couche intérieure (1), un insert de carcasse (2) à un ou plusieurs plis, des tringles (3), en particulier avec des profils de tringles (4), au niveau d'un poste de carcasse (10) sur un tambour de construction de carcasse (16) et en créant les retournements de plis,
- application des parois latérales (7') sur la carcasse (25),
- transfert de la carcasse (25) pourvue des parois latérales (7') à une machine de bombage (22) et bombage de la carcasse (25) pour obtenir une forme de tore,
**caractérisé en ce que** la carcasse (25) créée sans parois latérales est transférée à un dispositif de transfert (23) sur lequel elle reste également pendant l'application des parois latérales (7') ainsi que pendant le transfert subséquent à la machine de bombage (22).

2. Procédé selon la revendication 1, **caractérisé en ce que** les parois latérales (7') sont appliquées au niveau d'un poste de parois latérales (11) par un dispositif de fourniture de parois latérales (21) sur des tambours de parois latérales (19) sous forme de bandes de mélange s'étendant sous forme annulaire sur la périphérie, le dispositif de transfert (23) conjointement avec la carcasse (25) est déplacé avant le poste de parois latérales (11), les tambours de parois latérales (19), pour faire adhérer les parois latérales (7'), sont approchés coaxialement de la carcasse (25) et sont à nouveau écartés de la carcasse (25) après l'adhésion des parois latérales.

3. Procédé selon la revendication 1 ou 2, **caractérisé en ce que** les parois latérales (7') de la carcasse (25) sont à chaque fois adhérées dans la région radialement à l'intérieur des tringles (3) sur la couche intérieure (1).

4. Procédé selon l'une quelconque des revendications 1 à 3, **caractérisé en ce que** le dispositif de transfert est déplacé le long d'une voie de transfert linéaire (z) depuis le poste de carcasse (10) jusqu'à la machine de bombement (22).

5. Procédé selon l'une quelconque des revendications 1 à 4, **caractérisé en ce que** les parois latérales sont repliées au niveau du dispositif de bombement (22) et sont amenées dans leur position finale.

6. Installation de fabrication d'une carcasse pour un pneumatique de véhicule, qui est complétée avec un ensemble de ceinture et une bande de roulement (8) pour produire un pneu brut fini, comprenant un poste de carcasse (10) avec une machine de carcasse (15) et un tambour de construction de carcasse (16), un dispositif pour l'application séparée des parois latérales (7'), un poste de bombement (12) avec une machine de bombement (22) et un dispositif de transfert (23) pour la carcasse (25), déplaçable le long d'une voie de transfert (z),
**caractérisée en ce que**
le dispositif pour l'application séparée des parois latérales (7') est un poste de parois latérales (11) positionné entre le poste de carcasse (10) et le poste de bombement (12), avec deux tambours de parois latérales (19) qui peuvent être déplacés au niveau d'une fixation (20) parallèlement à la voie de transfert (z), les tambours de parois latérales (19) conjointement avec la fixation (20) pouvant être déplacés le long d'un bâti (18) dans et hors de la voie de transfert (z).
